# EUROPEAN PATENT APPLICATION

(11) **EP 4 810 139 A1**
(43) Date of publication of application: **23.09.2026**
(21) Application number: 26165538.5
(22) Date of filing: 17.03.2026
(51) Int. Cl.: A63F 13/355, G06F 9/451, G06F 9/455, G06Q 10/10, G09B 9/00, H04N 21/222

(54) **SYSTEM FOR PROVIDING REMOTE MANAGEMENT OF DIGITAL DEVICES**

(30) Priority: 18.03.2025 IT 202500005478
(71) Applicant: FiberCop S.p.A., 20127 Milano (IT)
(72) Inventor: FERRARA, Domenico, 90147 PALERMO (PA) (IT); SAVAIA, Ruggero, 90147 PALERMO (PA) (IT)
(74) Representative: Cevini, Gaia

(57) **Abstract**

It is disclosed a system for providing a remote management of a digital device which is adapted to cooperate with a human interface device. The system comprises: a management server located at a remote position with respect to the digital device, the management server being configured to receive a command from a user device to be executed by the digital device; a first controller located at an intermediate position between the management server and the digital device, the first controller being connected to the management server; a second controller connected to the first controller and to the digital device. The first controller is configured to receive the command from the management server and forward it to the second controller, and the second controller is configured to emulate the human interface device and provide the command to the digital device to execute it.

## Description

### Technical field

The present invention relates to the field of systems providing a remote access to digital devices and a remote management thereof, in particular for training purposes.

### Background art

In the last years, an increasing interest arose for systems and methods allowing human operators to remotely access a digital equipment, for example an equipment belonging to a communication network infrastructure or a device at a user's premises, and to remotely interact with it. An important application involves training a human operator to work with a digital device by providing to the operator remote access to the digital device and remote control thereof.

As known, systems exist which allow to remotely access a physical digital device (such as, for instance, a personal computer, a tablet, a smartphone, or the like) and for managing the device, for, e.g., maintenance purposes. Various software tools exist which are providing these functionalities, such as TeamViewer and AnyDesk.

TeamViewer provides remote access to computers and other endpoints as well as their control and maintenance. After the connection is established, the remote screen is visible to the user at the other endpoint. AnyDesk is a remote desktop application providing access to personal computers and other devices running the host application.

Additionally, systems like PS Remote Play and XBOX Remote Play enable the remote control of video game consoles such as Playstation^{®} 4 and later ones and XBOX^{®} One and later ones. The Remote Play functionality allows to wirelessly transmit video and audio output from the console to a receiving device, which would also control the console. Remote Play works either nearby, when both the console and the receiver are in the same home local area network, or remotely via the Internet.

### Summary of the invention

The inventors noticed that some of the software tools cited above, such as TeamViewer and AnyDesk are designed for remote control of personal computers and mobile devices running specific operating systems, such as Windows, macOS, iOS, Android. Also, when using this kind of systems, at least one of the involved devices must have installed thereon a specific software application; use of TeamViewer, in particular, requires that both the involved devices have installed thereon the TeamViewer application. Finally, the device to be remotely controlled has to be connected to a communication network, either a local area network (LAN) or the Internet. The lack of network connectivity makes any remote control impossible.

Other systems like the Remote Play systems, on the other hand, are intended for the remote control of specific consoles. Also in this case, the device to be remotely controlled must have installed thereon a specific software application.

In view of the above, the Applicant has tackled the problem of providing a system for providing a remote management of digital devices which overcomes the aforesaid drawbacks. In particular, the Applicant has tackled the problem of providing a system for a remote management of digital devices which allows to remotely manage a larger variety of digital devices than the known software tools mentioned above. Indeed, as it will be clearer from the following description, the system of the present invention allows to remotely manage any digital device without requiring any specific configuration of the device itself or the presence of any specific operating system or software application to be installed thereon and without requiring the device to be connected to the Internet.

The digital devices that may be remotely managed by the system of the present invention comprise computers, set-top boxes, media players, tablets, smartphones, video gaming consoles (e.g., PlayStation^{®} 3, XBOX^{®} 360, Nintendo Switch^{™}), etc.

In the present description and in the claims, the expression "remote management of a digital device" refers to the operations of providing one or more commands to the digital device from a remote location, and having those commands executed at the digital device.

According to embodiments of the present invention, this problem is solved by a system and a method as described herein below. The system enables a remote interaction with a number of digital devices (test devices) by means of a distributed infrastructure comprising a central management server and a network of geographically distributed first controllers, each of the first controllers being in turn connected to a number of second controllers, wherein each second controller is connected to a respective digital device. The central management server receives commands from users to remotely manage the digital devices, and each first controller acts as a distribution node forwarding the commands to the group of second controllers connected thereto. These second controllers emulate the functionality of Human Interface (HID) peripherals to execute the commands at the digital devices.

According to an aspect, the present invention provides a system for providing a remote management of a digital device, the digital device being adapted to cooperate with a human interface device, the system comprising:
- a management server located at a remote position with respect to the digital device, the management server being configured to receive a command from a user device to be executed by the digital device;
- a first controller located at an intermediate position between the management server and the digital device, the first controller being connected to the management server;
- a second controller connected to the first controller and to the digital device,

wherein the first controller is configured to receive the command from the management server and forward it to the second controller, and
wherein the second controller is configured to emulate the human interface device and provide the command to the digital device to execute it.

Preferably, the management server is further configured to receive a video signal which is captured at the output of the digital device and which comprises visual output data of the digital device, to generate a video stream based on the video signal and to distribute the video stream to the user device.

According to some embodiments, the system further comprises an encoder device configured to receive a video signal which is captured at the output of the digital device and which comprises visual output data of the digital device, to generate a video stream based on the video signal and to send the video stream to the management server, the management server being configured to distribute the video stream to the user device.

According to an example, the digital device comprises a USB interface as input interface for the human interface device, and the second controller comprises a Digispark board and a DigiKeyboard library to emulate a USB keyboard and/or a DigiMouse library to emulate a USB mouse and/or a DigiJoystick library to emulate a USB joystick.

According to embodiments of the system, the second controller is connected to the first controller by means of a wired serial connection implemented using a SoftSerial library.

According to other embodiments of the system, the second controller is connected to the first controller by means of a wireless connection implementing a Bluetooth Low Energy (BLE) or Zigbee communication protocol.

Preferably, the user device is configured to provide the user with a web interface to input the command.

Preferably, the management server is configured to receive a number of commands from the user device, the commands being associated with a training session during which the user remotely manages the digital device, and to associate a unique key identifier with the training session.

Preferably, the management serve is configured to store in a first database information relating to the training session as associated with the key identifier, the information comprising a device identifier permanently associated with the digital device.

Preferably, upon reception of any of the number of commands of the training session form the user device, the management server is configured to:
- retrieve the device identifier from the first database using the key identifier;
- process the command to generate a formatted command comprising the device identifier; and
- store the command and the device identifier in a second databased managed by a memory-caching system.

In an example, the memory-caching system is Memcached.

According to embodiments of the system, the management server is configured to remove the command from the second database once the command has been sent to the first controller.

Preferably, the first controller is configured to receive the command by periodically performing a request to the management server. According to embodiments, the management server and the first controller are connected within a local area network and the first controller is configured to receive the command by periodically performing a request to the management server, the request being a HTTP GET request.

Preferably, the first controller is connected to a number of second controllers in turn corrected to a number of corresponding digital devices, and the first controller is configured to route the command to the second controller connected to the intended digital device on the basis of the device identifier.

According to another aspect of the present invention, it is provided a method for providing remote management of a digital device, the digital device being adapted to cooperate with a human interface device, the method comprising:
a) by a management server located at a remote position with respect to the digital device, receiving a command from a user device to be executed by the digital device;
b) by a first controller connected to the management server and located at an intermediate position between the management server and the digital device, receiving the command from the management server and forwarding it to the second controller; and
c) by a second controller connected to the first controller and to the digital device, emulating the human interface device and providing the command to the digital device to execute it.

### Brief description of the drawings

The present invention will become clearer from the following detailed description, given by way of example and not of limitation, to be read with reference to the accompanying drawings, wherein:
- Figure 1 schematically shows an exemplary system for providing remote management of a digital device according to the present invention;
- Figure 2 is a flowchart representing the operations for sending commands from a user device to a test device to remotely manage it;
- Figure 3 is a flowchart representing the operations for providing the user device with a video stream of visual output data from the test device that is remotely managed, according to embodiments of the present invention; and
- Figure 4 is a flowchart representing the operations for providing the user device with the video stream of the visual output data from the test device that is remotely managed, according to other embodiments of the present invention.

### Detailed description of preferred embodiments of the invention

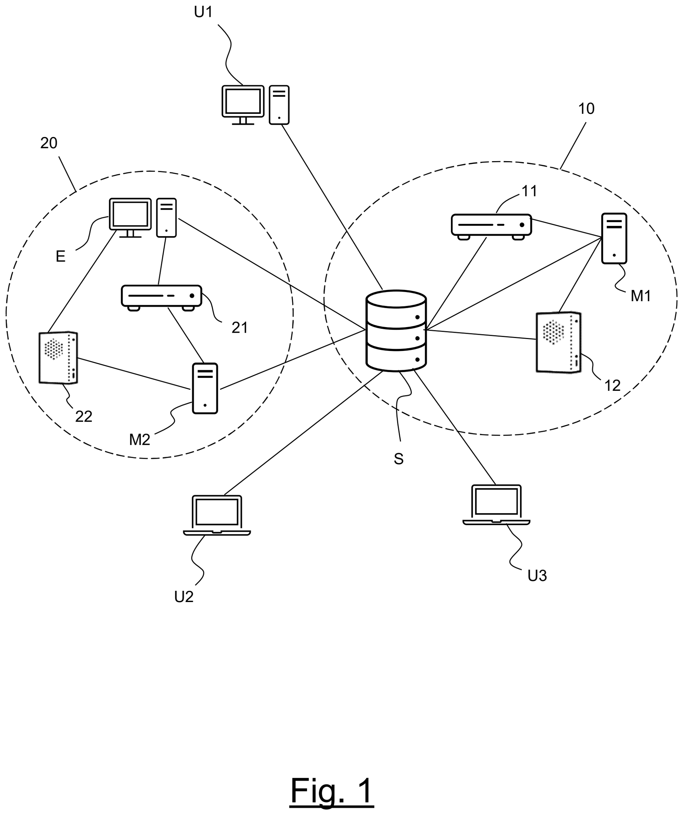

Figure 1 schematically shows a scenario where the system of the present invention is implemented. The exemplary scenario of Figure 1 comprises a number of digital devices distributed across different geographic locations. The digital devices may comprise computers, set-top boxes, decoders, media players, tablets, smartphones, video gaming consoles, etc.

In particular, the exemplary scenario shown in Figure 1 comprises a number of digital devices configured to be remotely managed for training purposes. The digital devices may be made available by a company for training human operators to provide assistance on network equipment or customers' own digital devices. These digital devices will be identified as "test devices" in the following description.

The system of the present invention provides for running training sessions. During each training session, a human operator (also indicated as "user") preferably uses a user interface running on a user device to input one or more commands for a test device to remotely manage the test device, the user interface being also configured to display visual output data of the test device during the training session, as it will be described herein after.

Preferably, each test device is configured to be connected to at least one human interface device (HID) for taking input commands from a human operator, in particular to an input peripheral such as a keyboard, a pointing device (e.g., a mouse), a joystick or the like. More in particular, each test device is configured to be connected to an input peripheral via a respective input interface, such as a USB (Universal Serial Bus) interface or another type of interface such as a serial interface of the RS-232 type or a PS/2 port.

Moreover, each test device is configured to provide one or more output signals, in particular a video signal and, possibly, an audio signal. The video signal comprises visual output data of the test device. The visual output data of the test device comprises information representing the output of the test device in a visible format. The visual output data may represent a graphical user interface of the test device reporting data on the ongoing operation of the device in the form of, for instance, texts and graphics. In case the test device is a gaming console, the visual output data comprises the images or frames of the videogame. The audio signal comprises digital audio data relating to sounds possibly generated by the test device (e.g. the sounds of a gaming console). Another example may be the graphical interface of a set-top box.

The test devices of Figure 1 are distributed among two areas, a first area 10 and a second area 20, which can be geographically remote from each other. An area may correspond to a site or premises of the company. The first area 10 comprises a first test device 11 and a second test digital device 12; the second area 20 comprises a first test device 21 and a second test device 22. This situation is merely exemplary, as the system may manage an arbitrary number of test devices distributed in an arbitrary number of different areas, as it will be clear from the following description.

According to embodiments of the present invention, as schematically represented in Figure 1, the system for remotely managing the digital devices 11, 12, 21, 22 comprises a central server S that will be indicated as "management server". In the exemplary scenario represented in Figure 1, the first area 10 is a local area of devices located nearby the management server S, while the second area 20 is a remote area of devices that are located at a certain distance from the management server S.

The management server S is provided with a processor and one or more memory units (not shown in the drawings). The processor is configured to run a management software module to allow the human operator to remotely access and manage the test devices by providing commands to them. This software module may be in the form of an API (Application Programming Interface). The management server S preferably also comprises a web server software module such as Apache HTTP Server or *nginx.* The memory units may comprise one or more hard disks and random-access memory (RAM) devices.

The system of the present invention further comprises a number of first control devices (or, simply, first controllers) that are geographically distributed across the areas where the test devices are located, each first controller being at an intermediate position between the management server and the test devices of a respective area. Moreover, the system comprises a number of second control devices (or, simply, second controllers) at the locations of the test devices, each second controller being connected to a respective test device. Each slave controller is substantially co-located with a respective test device. For simplicity, in the present description the first controllers will be indicated as "master controllers" and the second controllers will be indicated as "slave controller". The master controllers function as "distribution nodes" forwarding the commands to the slave controllers, which are connected to the test devices and emulate the functionality of HID peripherals, as it will be described herein after.

In particular, the system comprises a respective master controller located in each one of the areas where the test devices to be managed are distributed. The system represented in Figure 1 comprises a first master controller M1 located in thew first area 10 and a second master controller M2 located in the second area 20.

Each master controller preferably comprises a microcontroller (or microcontroller unit, MCU) such as the ATmega328P microcontroller, manufactured by Microchip Technology Inc., Chandler, Arizona, USA, or one microcontroller from the ESP32 series manufactured by Espressif Systems (Shanghai) Co., Ltd, Shanghai, China.

Each master controller M1, M2 is preferably connected to the management server S through a communication module associated therewith. The connection may be a wired connection, for instance a wired serial connection. In particular, the management server S and each master controller M1, M2 may be connected within a private communication network managed by the company (e.g., a local area network or LAN) or within a public communication network (e.g. the Internet). The communication module of the master controller may be an Ethernet module, such as the W5500 chip manufactured by WIZnet Co., Ltd., Korea. The microcontroller and the communication module of the master controller may be connected via their serial peripheral interfaces (SPIs).

Each slave controller preferably comprises a microcontroller capable of emulating the functionalities of the at least one human device interface of the test device. A slave controller which is to be connected to a test device equipped with a USB interface may, for example, comprise a Digispark board comprising an ATtiny85 microcontroller manufactured by Microchip Technology Inc., Chandler, Arizona, USA with a built-in USB interface. For example, the slave controller may comprise the DigiKeyboard library to emulate a USB keyboard and/or the DigiMouse library to emulate a USB mouse and/or the DigiJoystick library to emulate a USB joystick. A slave controller which is to be connected to a test device which is not equipped with a USB interface, and which is equipped with a PS/2 port instead, may be configured to communicate with this type of interface or the slave controller may comprise a PS/2-USB protocol conversion circuit (an adapter) so that communication may be established via the USB protocol.

Each slave controller is connected to its respective test device and to the master controller of the corresponding area. The connection between the slave controller and the test device is implemented via its input interface, e.g. its USB interface in case the test device is equipped with a USB interface.

The connection between the slave controller and the master controller may be a wired connection, in particular a wired serial connection. In case the slave controller comprises a Digispark board, the serial connection between the slave controller and the master controller is preferably implemented using the SoftSerial library, in particular the Digispark_SoftSerial-INT0 library, which, as known, is a modified version of the SoftSerial library to use the INTO interrupt instead of the PCINT0 interrupt. Indeed, advantageously, using this library allows the Digispark board to simultaneously use libraries such as DigiKeyboard, Digimouse and DigiJoystick without generating conflicts related to hardware resources and the functionalities required by each library. Specifically, the Digispark board has a limited number of hardware resources and pins. The SoftSerial library uses interrupts to manage serial communication on manually configured pins, while DigiKeyboard emulates a keyboard using the microcontroller's built-in USB interface. These operations can be in conflict because they both require limited hardware resources such as access to interrupts. During operation, the microcontroller must manage the USB protocol in real-time, blocking other interrupts or processes. This can result in data loss or undesired behaviors when using the SoftSerial library simultaneously, which depends on interrupts to receive and transmit serial data.

Alternatively, the slave controller may be connected to the master controller through a wireless connection. According to these embodiments, the slave controller is provided with a radio frequency module, such as, for instance, the nRF24L01+ single chip 2.4GHz transceiver manufactured by Nordic Semiconductor ASA, Norway. The communication protocol may be Bluetooth Low Energy (BLE) or Zigbee. This radio frequency module may be connected to a Digispark board of the slave controller via its serial peripheral interface (SPI). In this case, the Digispark_SoftSerial-INT0 library is preferably used.

The system further comprises a number of capture modules (not shown in Figure 1), in particular it comprises one respective capture module (also indicated as capture card) for each one of the test devices to be remotely managed. Each capture module is configured to capture the output signals (namely, the video output signal or the video and audio output signals) provided by the test device. The capture module may be connected to the test device via, for instance, a high-definition multimedia interface (HDMI). Each capture module may be either connected to the management server S (for example, within the first area 10, where the test devices are directly connected to the management server S) or to a further processing device which will be indicated herein after as encoder device. The encoder device may be a PC with an integrated video card, for instance a Raspberry pi 4 computer. Figure 1 shows an encoder device E within the second area 20. The encoder device E is connected to the management server S and is configured to receive the output signals from the capture modules and forward them to the management server S. In the scenario of Figure 1, the capture cards connected to the test devices of the second area 20 are connected to the encoder device E.

The system also comprises one or more user devices, which are used by a human operator to remotely access and manage the test devices for, e.g., training purposes. The system represented in Figure 1 comprises a first user device U1, a second user device U2 and a third user device U3. Each user device U1, U2, U3 preferably comprises a display. Each user device U1, U2, U3 is any one of a computer, a tablet, a smartphone ore the like. Each user device U1, U2, U3 is connected to the management server S through a communication network, either the private communication network or the public communication network mentioned above. Each user device U1, U2, U3 is provided with a user interface allowing a human operator to interact with the software modules running on the management server S through the communication network connecting the user device and the management server S. According to advantageous embodiments, the user interface is a web interface and each user device U1, U2, U3 is configured to provide access to such web interface to enable the user to interact with the software modules of the management server S.

Each user device U1, U2, U3 is configured to capture and process the commands entered by the human operator through the user interface and send them to the management server S. To capture and process a command, each user device U1, U2, U3 is preferably provided with a JavaScript module. The processing of the commands preferably comprises encoding each captured command to provide a unique representation thereof. For instance, encoding is performed according to the HID Usage Tables for Universal Serial Bus (USB) as defined in their latest version (which is retrievable at https://usb.org/sites/default/files/hut1_5.pdf). This facilitates the interpretation of the commands allowing compatibility with numerous input devices and enabling extended interoperability.

In particular, a command is detected through a specific event (such as a keyboard or mouse input). For example, when the human operator presses the key corresponding to letter "a" on the keyboard, the command is captured by associating it with a keyCode value of 65 in JavaScript. The keyCode is a numerical value assigned to each key on the keyboard to identify key press events in JavaScript. The keycode is then encoded, namely it is converted into the corresponding value of the HID Usage Tables, which is 0x04 in hexadecimal format.

Finally, each user device U1, U2, U3 is configured to send the encoded command to the management server S. Sending the encoded command to the management server S may be performed by using a request formatted according to the Asynchronous JavaScript and XML (AJAX) technique. This asynchronous communication method allows commands to be transferred with low latency and without interrupting the user's operational flow.

According to the embodiments described above, the user device directly converts the keyCodes into the corresponding format from the HID Usage Tables before sending a command to the management server S. This way of operating the systems allows streamlining the operations the management server needs to perform, improving the efficiency and the overall optimization of the system. The server-side load is reduced promoting faster communication and a distributed management of the commands. Alternatively, according to other embodiments, the commands are transmitted to the management server S as keyCodes. In this case, the management server S is configured to convert each keyCode to the corresponding value from the HID Usage Tables. This approach centralizes the encoding operation, allowing the client-side processing to remain lighter while increasing the computational load on the management server.

As anticipated above, the management server S is preferably provided with a management software module to allow the human operators to remotely access and manage the test devices. The memory units of the management server S preferably comprise a first database containing data related to the training sessions. The first database is preferably a relational database, which may be managed by MySQL, for instance, and may be stored on a hard disk. The first database preferably also contains a number of device identifiers, each device identifier being associated permanently with a respective test device. Alternatively, the device identifiers may also be stored on another database connected to the management server S. Each device identifier may comprise a code in turn comprising first data - e.g., a number and/or a letter - identifying the location of the test device (namely, data identifying the area where the device is located) and second data - e.g., a letter - identifying the specific device. For instance, the two areas 10, 20 represented in Figure 1, which, as already mentioned, may correspond to two different premises of the company, can be associated with a respective number, for instance 0 and 1; in this way, for example, a first test device of the first area 10 may be identified with code "0a", a second test device of the same first area 10 may be identified with code "Ob", and so on.

Moreover, the memory units of the management server S, in particular the RAM devices, preferably comprise a memory structure (referred to, for simplicity, as "second database") containing data related to the commands input by the human operators to remotely manage the test devices. The second database may be managed by a memory-caching system used by the management software module to store the commands, such as Memcached or Redis.

Moreover, the processor of the management server S is preferably provided with a streaming software module for managing and distributing to the user devices a video stream resulting from the processing of the output signals (a video output signals or video and audio output signals) coming from the test device during a training session. The streaming software module may be, e.g., MediaMTX, which is based on streaming protocols such as the Real-Time Streaming protocol (RTSP) and the Web Real-Time Communication (WebRTC). MediaMTX may be managed either via command line directly from the management server S or through its APIs. This latter possibility ensures a flexible integration into existing workflows enabling quick and efficient configuration and management of streaming sessions. The streaming software module preferably integrates a further software module configured to process and encode the output signal(s) and prepare the video stream for its distribution. This further software module may be based on ffmpeg. The distribution of the video stream may occur through the RTSP protocol, using the User Datagram Protocol (UDP). The video stream may be made available for web viewing via the WebRTC protocol.

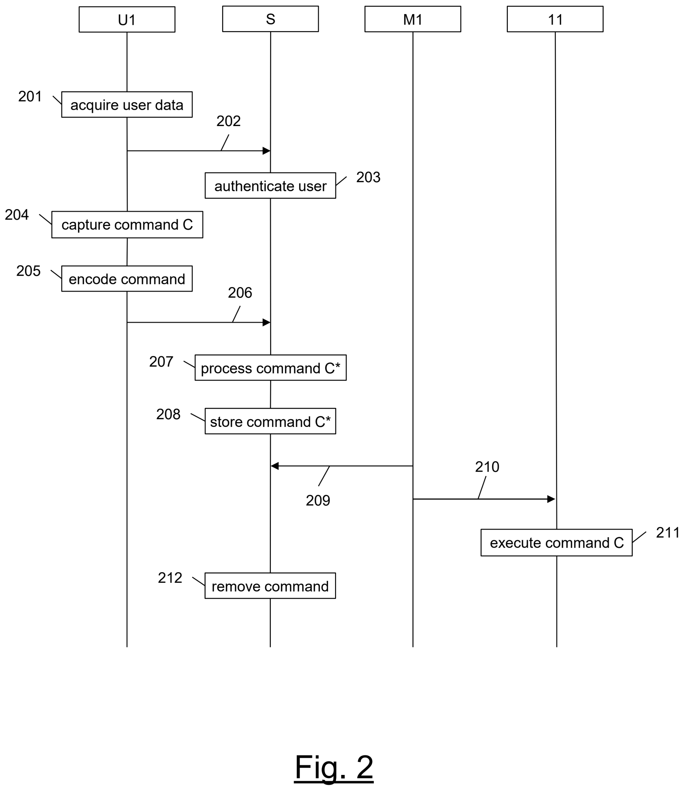

The operations performed by the system for allowing a human operator to remotely access and manage a test device will be clearer from the following description of a training session, given with reference to the flowcharts of Figure 2, Figure 3 and Figure 4.

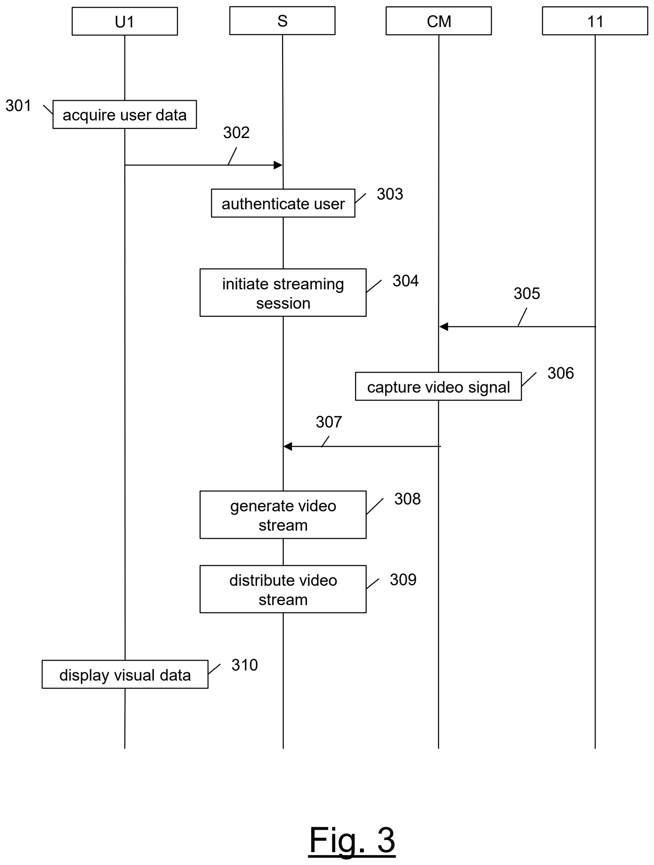

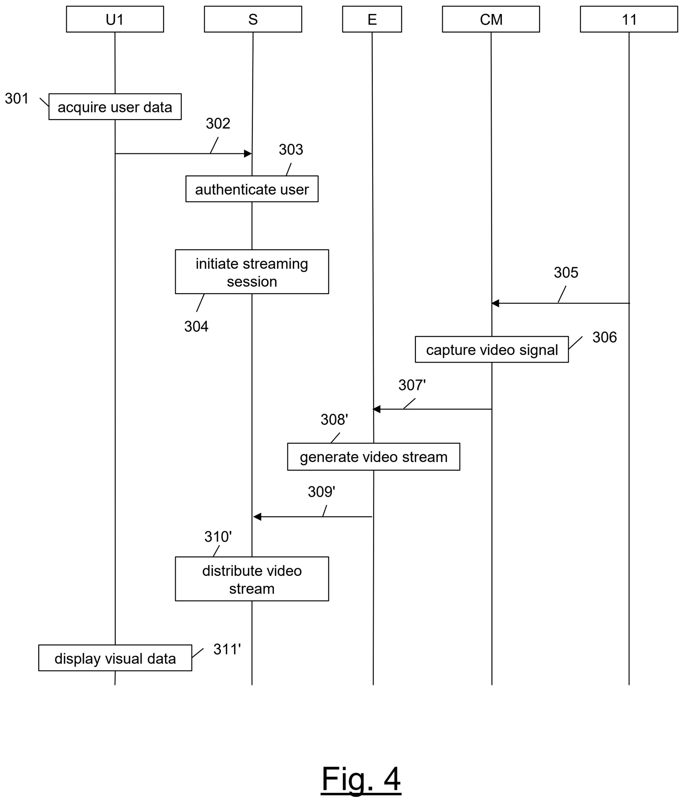

The flowchart of Figure 2 represents the operations for sending commands from a user device to a test device to remotely manage it. The flowchart of Figure 3 represents the operations for providing the user device with the video stream from the test device that is remotely managed, according to embodiments of the present invention. The flowchart of Figure 4 represents the operations for providing the user device with the video stream from the test device that is remotely managed, according to other embodiments of the present invention.

According to the present invention, when a human operator wishes to train on remotely managing a given test device, for example, the test device indicated with reference number 11 in Figure 1, a training session must be initiated by the system.

The system preferably allows a human operator to book the training session. This means that the human operator (for example, a team leader or supervisor wishing a company's employee to train on the given test device) may use the user interface at a user device U1, U2, U3 to input commands to the management server S with information associated with the training session to be booked. This information preferably comprises:
- data indicating a time slot (date and time of the day) for the training session;
- data identifying the test device to be used; and
- data indicative of an identity of the human operator(s) who will be actually involved in the training session. This data may comprise a username and a password univocally identifying the user(s) involved in the training session.

During the operation of booking the training session, the management server S preferably generates a key identifier univocally associated with the training session and communicates it (e.g., by an e-mail) to the user to allow the user to access the training session. From the data input by the user, the management server S preferably recovers the device identifier associated with the test device involved in the training session. It also preferably associates each user involved in the training session with a unique user identifier. The management server S then preferably stores the information associated with the training session (namely, the device identifier, the user identifier(s) and the key identifier) in the first database. Once the user's data are stored as associated with the key identifier of the training session, any user whose identity is associated with the stored data becomes an authorized user who is allowed to access the training session.

When the training session is to be started, the system implements a login process managed by the management software module that is configured to authenticate the user. In particular, the user interacts with the user interface at a user device, for instance the user device indicated as U1 in Figure 1, to input data indicative of her/his identity (e.g., the username and password indicated above) to access the training session (step 201). More in particular, the user interface preferably presents the user with a dedicated login page where the user may enter the data indicative of her/his identity (e.g., username and password), and the key identifier associated with the training session. The user device U1 preferably sends the data entered by the user to the management server S (step 202). The management software module running on the management server S preferably authenticates the user (step 203) by verifying that the current date and time of the day and the data entered by the user correspond to data stored in the first database associated with a booked training session.

Once authenticated, the user may interact with the user interface to enter one or more commands for the test device to be remotely managed. An exemplary command for the test device is associated with the operation of pressing any key on a USB keyboard connected to the user device.

The following operations are preferably implemented for each command entered by the user (e.g., resulting from pressing a key on the USB keyboard). For sake of example, indeed, the following description is related to the processing of a single command C. Command C is captured by the user interface at the user device U1 (step 204) after, for example, the user has pressed the key "a" on the USB keyboard. Then, according to embodiments of the present invention already anticipated above, command C is preferably encoded by converting it to the corresponding value C* from the HID Usage Tables (step 205). Once encoded, command C* is sent to the management server S (step 206).

Therefore, according to the embodiments of the present invention described herein above, each command is encoded at the user device before being sent to the management server S. In this case, the user device converts the keyCode into the corresponding format from the HID Usage Tables before sending the command to the server. Alternatively, as already anticipated above, each command may be encoded by the management server S. In this case, the command is sent to the management server S as a keyCode and the management server S will convert the command into the corresponding value from the HID Usage Tables.

In case the command is encoded at the user device U1, the management server S, upon reception of the encoded command C*, preferably processes it. In particular, the management server S preferably performs the following operations (step 207):
- identification of the test device to which the command C is to be sent; and
- formatting of the encoded command C* in a proper format for sending it to the master controller.

From information such as the date and time of the day when the user is entering the command, the management server S preferably retrieves the key identifier of the training session from the first database. The identification of the test device is then preferably performed by the management server S by using the key identifier to retrieve the information associated with the training session which have been stored, such information comprising the device identifier, as described above. The processing of the encoded command C* performed by the management server S then preferably comprises formatting the encoded command C* into the following format:

```
[device identifier][encoded command C*]
```

where the device identifier is retrieved by the management server S by means of the key identifier. An exemplary formatted command may be "0a36" where "0a" is the device identifier, and 36 is the encoded command C*.

It is to be noticed again that the operations described above with reference to step 207 are preferably performed for each command entered by the user.

At step 208, the management server S preferably stores the data couple comprising the device identifier and the command C (in particular, preferably, the encoded command C*) in the second database. This operation of the management server S allows ensuring the traceability of the command and the test device to which it is intended.

According to these embodiments of the present invention, the commands are stored in the second database, which is managed by a memory-caching software module such as Memcached. This advantageously allows performing quick and optimized checks on training sessions, ensuring security and efficiency. Indeed, this approach offers fast access to commands, optimizing performance and ensuring efficient memory data management. Storage is implemented by following a First-In, First-Out (FIFO) sorting logic, ensuring that commands are processed and sent to the master controllers in the exact order they were received from the user device. This approach preserves the original command history, which is essential for maintaining operational consistency and a smooth flow of interactions. Furthermore, the use of a software such as Memcached allows for high scalability and optimized management of multiple requests, reducing latency times and improving the responsiveness and the rapidity in processing the commands, which is ideal for real-time training sessions.

According to other embodiments, the management server S stores each command in the first database, which is preferably a relational database. The use of the relational database guarantees that the data is easily shareable and accessible, providing a high level of persistence and integrity.

Each master controller M1, M2, in particular its communication module, preferably periodically sends a request to the management server S, in particular to its management software module, for obtaining commands directed to the test devices connected thereto. For sake of example, at step 209, the first master controller M1 sends a request for commands to the management server S. The request may be an HTTP GET request to the management software module performed through an Ethernet communication module, as already described above. Upon reception of the request from the master controller M1, the management server S preferably further processes each command by appending thereto an end-of-command symbol, which is a symbol identifying the end of the command, such as "]" or ";". Therefore, the final format of the command before being sent to the mater controller is the following:

```
  [device identifier][encoded command C*][end-of-command symbol].
```

An exemplary formatted command may be "0a36;" where "0a" is the device identifier, 36 is the encoded command C* and ";" is the end-of-command symbol.

At step 210, the master controller M1 receives the command, which has been formatted as described above, from the management server S and forwards it to the slave controller that is connected to the test device to which the command is intended.

The forwarding of the formatted command to the slave controllers may be performed in different ways. In any case, preferably, the master controller M1 is configured to route the formatted command to the intended slave controller (and hence, to route the command C to the intended test device) on the basis of the device identifier.

According to some embodiments of the present invention, each master controller M1 may comprise a demultiplexer module. The demultiplexer is a known component and will not be described in detail. It preferably comprises a number of output lines which equals the number of test devices to which the master controller M1 is connected, and two or more selection lines depending on the number of test devices. If the number of selection lines is N (N being an integer number equal to or greater than 1), the number of selectable output lines is 2^{N}. Each output line is selected on the basis of a respective combination of bits over the selection lines. According to these embodiments, the demultiplexer is configured so that each output is associated with a respective test device. When the master controller M1 receives a formatted command comprising the device identifier of a specific test device, it preferably sets the selection lines to route the command to the output line connected to this specific test device.

According to other embodiments, the master controller M1 preferably broadcasts the received formatted commands to reach all the slave controllers connected thereto. According to these embodiments, each slave controller is configured with the device identifier associated with the specific test device to which it is connected. Hence, when a slave controller receives from the master controller M1 the formatted commands which are sent in broadcast, it checks the device identifier contained in each command to process only those commands intended for the test device connected thereto.

At step 211, the slave controller preferably receives the formatted command and processes it. In particular, the slave controller checks whether the formatted command has the correct format described above. In case the check provides a positive outcome, the slave controller preferably executes the command C; in particular, the slave controller sends the command C to the test device by emulating the behaviour of the human interface device, in particular its input peripheral. As already mentioned above, in order to emulate a USB keyboard, for example, the slave controller may use the DigiKeyboard library; in addition, or alternatively, to emulate a USB mouse, the slave controller may use the DigiMouse library. This allows the slave controller to send the command directly to the test device via the USB interface.

After providing the formatted command to the master controller M1, the management server S preferably removes the command from the database in which it has been stored (step 212). According to other embodiments, the command is instead kept stored in the first database.

Figure 3 shows a flowchart representing the operations for providing the user device U1 with the video stream obtained from the output signal(s) coming from the test device 11.

Steps 301-303 are similar to steps 201-203 already described above with reference to the flowchart of Figure 2. When the user accesses the training session, the management server S preferably initiates a corresponding streaming session to provide the user device U1 with the video stream obtained from the output signal(s) coming from the test device (step 304) during the training session. When the user accesses the training session, step 304 comprises associating the streaming session with the key identifier univocally associated with the training session.

Then, the process preferably comprises generating the video stream of the streaming session. This may be performed by the management server S through a request to the streaming software module. The request contains the key identifier in order to associate the video stream with the ongoing training session. When using MediaMTX APIs as described above, the request may be an API call executed by a dedicated PHP (Hypertext Preprocessor) script.

An example of an API call body is the following: 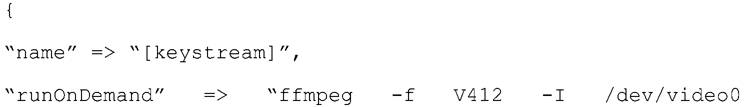 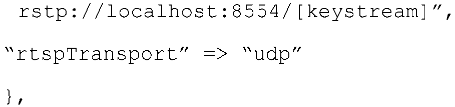 where "keystream" is the key identifier.

In particular, the capture module (indicated as CM in the flowchart) preferably captures the signal(s) that are output by the test device 11 (steps 305 and 306) and sends the captured output signal(s) to the management server S (step 307). At step 308, the management server S preferably processes the captured signal(s) and generates the video stream: in particular, the processing comprises encoding the captured signal(s) (for instance using ffmpeg, as indicated above in the API call).

At step 309, the management server S preferably distributes the video stream making it available for remote viewing by the user at the user device U1.

At the user device U1, the visual output data of the test device contained in the video stream are displayed through the user interface (step 310).

As already mentioned above, according to advantageous embodiments, the video stream is made available for web viewing via the WebRTC technology, and the user interface is a web interface. According to these advantageous embodiments, the web interface displaying the visual output of the test device is the same used to capture the commands sent by the user. The user can hence observe and monitor the visual output of the test device in real-time while controlling the test device remotely.

During the generation of the video stream, the same request to the streaming software module may contain a specific condition for managing inactivity. If no user remains active (namely, if no user is visualizing the visual output from the test device) for a period longer than a predefined time, such as 10 seconds, the distribution of the video stream by the management server S is suspended in an automatic manner. After the suspension, the distribution of the video stream may be restored if at least one user returns active. This advantageously prevents unnecessary use of resources and optimizes the system's workload.

An example of an API call body for the above-mentioned request is the following:

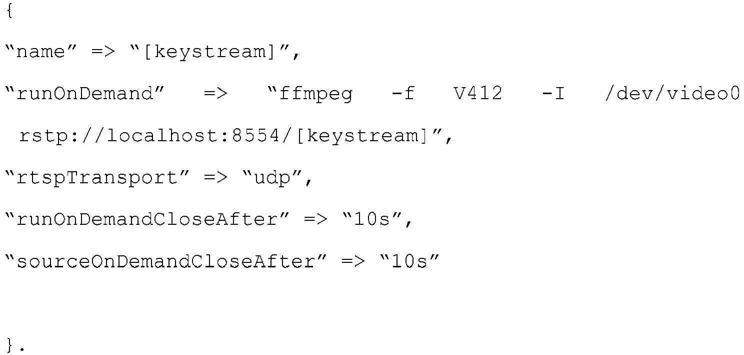

Moreover, according to embodiments of the present invention, the management server S periodically verifies whether the training session should be ended. In particular, the management server S preferably checks the end time of the training session. If the check provides that the time of the end of the training session is approaching, the management software module of the management server S preferably notifies the user of the training session before terminating the training session. Notification may be performed by displaying a message on the display of the user device. In the event that there is no other training session planned on the same device near in time, the end of the training session may be postponed. Furthermore, the management server S preferably verifies that there is at least one user present in the training session. In the event that there are no users present in the training session for more than 10 seconds, the management server S may suspend the training session (namely, it suspends the video streaming) and resume it when at least one user is present.

According to different embodiments, as represented in the flowchart of Figure 4, the capture module of the test device, for instance the capture card of the test device indicated with reference number 21 within the second area 20 represented in Figure 1, sends the test device output signal(s) to the encoder device E (step 307'). The encoder device E generates the video stream (step 308') and sends it to the management server S (step 309'). At step 308', in particular, the encoder device E preferably processes the captured signal(s) by encoding it(them) (for instance using ffmpeg, as indicated above in the API call) and generates the video stream, which is then sent to the management server S (step 309'). At step 310', the management server S preferably distributes the video stream making it available for remote viewing by the user at the user device U1. At the user device U1, the visual output data of the test device contained in the video stream are displayed through the user interface (step 311'). According to these embodiments, the video stream management is decentralized and distributed across multiple devices.

Furthermore, according to other embodiments of the invention, the processing operations of the management server S may be distributed over multiple servers using known load balancing techniques. On the other side, for the video stream distribution, streaming proxy servers may also be used.

The described system offers a significant improvement in remote management of digital devices, introducing an efficient and scalable solution that not only enhances operational efficiency but also enables cost-effective and simplified resource management.

A number of drawbacks of current systems may be overcome by the present invention:
- the system allows to remotely manage any digital device that supports interaction with a USB peripheral, such as keyboard and/or mouse, thereby broadening its application range to devices that do not natively support remote management;
- the system operation is not dependent on a network connection for the digital device to be remotely managed, provided that the device is connected to the management server or to a master controller without any prior configuration;
- the system does not require additional installations of, for instance, a specific software application on the test device and on the user device, as it may provide the remote access to the test device simply through a web application. This is particularly advantageous in the context of training applications.

Moreover, the system described above allows decentralization of the management thanks to the use of the master controllers distributed across different geographical locations but physically placed near the test devices. This distributed structure optimizes the management of commands and video streaming, ensuring greater operational efficiency. It improves resource utilization, reduces the load of the management server and expands the operational capabilities.

Furthermore, the decentralized management of the system provides, among other benefits:
- reduction of load on the management server and latency in command transmission;
- scalability, as new master or slave controllers may be introduced in the system without any significant impact on the operativity;
- reliability in the event of temporary management server interruptions;
- geographical flexibility;
- resource sharing across different locations.

The architecture described above allows the test devices to be distributed and shared between different locations ensuring accessibility even when they are not locally available, and this represents a significant advantage, especially in training and business environments. Thanks to the decentralized network, resources can be shared efficiently, enabling further cost savings.

## Claims

1. A system for providing a remote management of a digital device (11, 12, 21, 22), the digital device (11, 12, 21, 22) being adapted to cooperate with a human interface device, the system comprising:
- a management server (S) located at a remote position with respect to the digital device (11, 12, 21, 22), the management server (S) being configured to receive a number of commands from a user device (U1, U2, U3) to be executed by said digital device (11, 12, 21, 22), said commands being associated with a training session during which said user remotely manages said digital device (11, 12, 21, 22), and to associate a unique key identifier with said training session;
- a first controller (M1, M2) located at an intermediate position between said management server (S) and said digital device (11, 12, 21, 22), said first controller (M1, M2 being connected to the management server (S);
- a second controller connected to the first controller (M1, M2) and to the digital device (11, 12, 21, 22),
wherein said first controller (M1, M2) is configured to receive each of said number of commands from said management server (S) and forward it to said second controller,
wherein said second controller is configured to emulate said human interface device and provide each of said number of commands to said digital device (11, 12, 21, 22) to execute it, wherein said management server (S) is further configured to:
- store in a first database information relating to said training session as associated with said key identifier, said information comprising a device identifier permanently associated with said digital device (11, 12, 21, 22), and
- upon reception of any of said number of commands of the training session from the user device (U1, U2, U3):
- retrieve said device identifier from said first database using said key identifier;
- process the command to generate a formatted command comprising said device identifier; and
- store the command and the device identifier in a second databased managed by a memory-caching system.

2. The system according to claim 1, wherein said management server (S) is further configured to receive a video signal which is captured at the output of said digital device (11, 12, 21, 22) and which comprises visual output data of said digital device (11, 12, 21, 22), to generate a video stream based on said video signal and to distribute said video stream to said user device (U1, U2, U3).

3. The system according to claim 1, said system further comprising an encoder device (E) configured to receive a video signal which is captured at the output of said digital device (11, 12, 21, 22) and which comprises visual output data of said digital device (11, 12, 21, 22), to generate a video stream based on said video signal and to send said video stream to said management server (S), the management server (S) being configured to distribute said video stream to said user device (U1, U2, U3).

4. The system according to any of the preceding claims, wherein said digital device (11, 12, 21, 22) comprises a USB interface as input interface for said human interface device, and said second controller comprises a Digispark board and a DigiKeyboard library to emulate a USB keyboard and/or a DigiMouse library to emulate a USB mouse and/or a DigiJoystick library to emulate a USB joystick.

5. The system according to claim 4, wherein said second controller is connected to said first controller (M1, M2) by means of a wired serial connection implemented using a SoftSerial library.

6. The system according to any of claims 1 to **4,** wherein said second controller is connected to said first controller (M1, M2) by means of a wireless connection implementing a Bluetooth Low Energy (BLE) or Zigbee communication protocol.

7. The system according to any of the preceding claims, wherein said user device (U1, U2, U3) is configured to provide the user with a web interface to input said number of commands.

8. The system according to any of the preceding claims, wherein said memory-caching system is Memcached.

9. The system according to any of the preceding claims, wherein the management server (S) is configured to remove each of said number of commands from said second database once the command has been sent to said first controller (M1, M2).

10. The system according to any of the preceding claims, wherein said first controller (M1, M2) is configured to receive said number of commands by periodically performing a request to said management server (S).

11. The system according to any of the preceding claims, wherein said first controller (M1, M2) is connected to a number of second controllers in turn corrected to a number of corresponding digital devices (11, 12, 21, 22), and said first controller (M1, M2) is configured to route said number of commands to the second controller connected to the intended digital device (11, 12, 21, 22) on the basis of said device identifier.

12. A method for providing remote management of a digital device (11, 12, 21, 22), the digital device (11, 12, 21, 22) being adapted to cooperate with a human interface device, the method comprising:
a) by a management server (S) located at a remote position with respect to the digital device (11, 12, 21, 22), receiving a number of commands from a user device (U1, U2, U3) to be executed by said digital device (11, 12, 21, 22), said commands being associated with a training session during which said user remotely manages said digital device (11, 12, 21, 22), and associating a unique key identifier with said training session;
b) by a first controller (M1, M2) connected to the management server (S) and located at an intermediate position between said management server (S) and said digital device (11, 12, 21, 22), receiving each of said number of commands from said management server (S) and forwarding it to said second controller; and
c) by a second controller connected to the first controller (M1, M2) and to the digital device (11, 12, 21, 22), emulating said human interface device and providing each of said number of commands to said digital device (11, 12, 21, 22) to execute it,
the method further comprising, by said management server (S):
- storing in a first database information relating to said training session as associated with said key identifier, said information comprising a device identifier permanently associated with said digital device (11, 12, 21, 22); and
- upon reception of any of said number of commands of the training session from the user device (U1, U2, U3):
- retrieving said device identifier from said first database using said key identifier;
- processing the command to generate a formatted command comprising said device identifier; and
- storing the command and the device identifier in a second databased managed by a memory-caching system.
